# EUROPEAN PATENT SPECIFICATION

(11) **EP 0 648 317 B1**
(45) Date of publication and mention of the grant of the patent: **14.08.1996**
(21) Application number: 93915725.1
(22) Date of filing: 29.06.1993
(51) Int. Cl.: F16H 57/02

(54) **SERIES OF GEAR UNITS**
GETRIEBEREIHE
SERIE DE BLOCS D'ENGRENAGE

(30) Priority: 06.07.1992 EP 92306181
(43) Date of publication of application: 19.04.1995
(73) Proprietor: HANSEN TRANSMISSIONS INTERNATIONAL NV, B-2650 Edegem (BE)
(72) Inventor: FLAMANG, Peter, B-2800 Mechelen (BE); TALBOOM, Rene, B-2550 Kontich (BE)
(74) Representative: Badger, John Raymond
(86) International application number: EP9301655
(87) International publication number: WO9401700

(56) References cited:
- EP-A- 0 452 739
- DD-A- 290 556
- DE-A- 1 932 624
- GB-A- 673 190
- GB-A- 1 338 610
- US-A- 3 029 661

## Description

This invention relates to a series of gear units of the kind in which the series includes gear units of two or more stages and includes gear units providing a range of different torques and ratios. It relates also, but not exclusively, to a series which may include a variety of input and/or output shaft configurations.

Custom built gear units can be provided for all kinds of applications, this with a certain development and production cost. However, the number of variables such as torque, rotating speed, total ratio, number of stages, low speed shaft inclination and option of parallel or right angle shafts hampers the economic production of custom built gear units.

Since the 1950's, it has been known that standardisation of housings and rotating parts throughout a catalogued (i.e. predetermined), series of gear units can be very important in achieving required quality at minimised cost by enabling batch production.

For this purpose, GB Patent GB-A-673190 showed how the components can be standardised starting from a series of centre distances, which allows eg to use a gear set used as a given stage in one size gear unit, as another stage in another size. Another example of standardisation of components starting from a series of centre distances is disclosed by US-A-3029661.

In order to be competitive with custom built gear units, an optimal market adequacy of the series has to be aimed at; that is the series needs to include as best as possible a range of different size gear units and different numbers of stages and ratios etc to meet potential customer needs and this must be achieved without adversely affecting manufacturing and related costs. This involves an optimal choice of standardisation parameters, such as e.g. torque and ratio ranges and the variety of shaft configurations available in the series.

As an example, GB Patent GB-A-1338610 shows how such an optimisation procedure combines internal economy of the series with high market adequacy.

During the last decades, technical developments have affected the extent to which existing standardisation procedures necessarily produced an optimum balance between the variables available.

The hitherto known standardisation procedures are characterised for example by the requirement for a large number of different pinion shafts, or by requiring housings of different width for a given size of gear unit so as to allow standardisation of high speed pinion shafts. This latter feature does however lead to the need to provide certain shafts of a lower stiffness than may otherwise be desired.

They have been characterised also by a modular housing concept in combination with standardisation of pinion shafts as proposed in DE-A-1932624 but such modular housings have the disadvantage of requiring machining of many split faces, a need to maintain machining accuracy within small tolerances for split surfaces lying between successive shafts so as to allow for cumulative errors, and a greater assembly effort. Such standardisations also suffer the disadvantage of undesirably restricting the design of the gear units such that in right angle gear units (i e in which the input and output shafts are at right angles relative to one another) there is a non-central position of the high speed shaft extension, and of an externally stepped housing restricting access to the high speed shaft in the case of a double shaft which extends out through both sides of the housing.

Another hitherto known standardisation procedure is characterised by a non-modular housing design of internally asymmetrical shape as has been proposed in DD-A-290556. This however has the disadvantage that only gear units with parallel input and output shafts can be provided, and also disadvantages arise from the required unsupported length of the high speed shaft.

More recently it has become increasingly desirable to avoid superfluous machining of material, to provide improved and reliable torque load capabilities without increased production costs and without any reduction of market adequacy of the series.

For example, the evolution of gear technology during at least the past two decades from through-hardened and hobbed to case carburised and ground gears has allowed substantial improvement in the power rating of a pinion or gear component of a given size; this has also contributed to a need potentially to change the hitherto perceived optimum balance.

The present invention seeks to provide a series of gear units incorporating an improved standardisation procedure in which problems associated with known standardisation procedures are mitigated or overcome and which at least in part allows advantageous utilisation of technical developments that affect the design and/or capability of component parts of gear units.

In accordance with one of its aspects the present invention provides a series of gear units with increasing torque of the kind in which each gear unit comprises two or more stages with standardised shaft centre distances and standardised gear wheels where for any stage of given centre distance and gear ratio the same intermediate pinion shaft as hereinafter defined is used systematically in a non-stepped two stage housing and stepped three stage housings which are stepped symmetrically about a plane which extends transversely relative to said pinion shaft.

The term "pinion shaft" is used herein in relation to the present invention to refer to a shaft having a pinion formed integrally therewith.

The term "stepped housing" refers to a housing in which those parts of the housing, referred to as "bearing blocks", which support the gear shaft bearings are stepped, i e non-planar, at their inner and outer faces. In contrast a "non-stepped housing" is a housing having bearing blocks which are substantially planar at their inner and outer surfaces such that the pair of bearings provided in the respective bearing blocks to support a shaft are spaced in the direction of the length of the shaft by substantially the same distance for each shaft of the gear unit which extends between those blocks.

The meanings of other terms used in this specification are as follows:-
Gear set - the combination of a wheel and pinion which intermesh with one another;
Pinion - component of a gear set with the smaller number of teeth;
Wheel - component of a gear set with the greater number of teeth;
Gear ratio - ratio between the number of teeth of a wheel and of a pinion in a gear set;
Centre distance - distance between the axes of rotation of the pinion and wheel of a gear set;
Gear unit size - a characteristic related to the low speed centre distance or output torque capability of a gear unit;
Bevel gear stage assembly - sub-assembly of bevel gear input pinion shaft or shaft with pinion, bearings, mounting block, and bevel gear;
Internals - sub-assembly of gear components including shafts and bearings contained in a gear housing.

In accordance with a preferred aspect of the present invention the series of gear units is further characterised by the feature that for any high speed stage of given centre distance and gear ratio the same high speed pinion shaft is used systematically in a non-stepped two stage housing and at least one symmetrically stepped three stage housing. The high speed pinion shaft may be of either a single or double extension type, that is it may extend externally of the housing through only one or through both of the bearing blocks.

The series of gear units may comprise pairs of gear units having opposite handing of the shaft extension of at least one of the input and output shafts. The oppositely handed gear units may be gear units of the same size, using the same housing and the internals of one gear unit may be mounted in a manner which is reversed compared with that of the other gear unit so as to provide said opposite handing.

The series of gear units may comprise gear units in which the high speed gear stage is either a standardised cylindrical or standardised bevel gear set. The gear units may comprise housings of a kind adapted to receive and locate a high speed gear stage which is either of a cylindrical or a bevel gear set type.

Each bearing block of a gear unit preferably comprises at least a part which extends continuously (i e is not split) between the parallel axes of successive shafts such that said part may serve to dictate the spacing of said shafts.

Embodiments of the present invention will now be described, by way of example only, with reference to the accompanying drawings in which:-
Figures 1 to 3 show in cross-section parts of three gear units of a series in accordance with the present invention, being respectively two and three stage units of a first size and a three stage unit of a second, larger size, and
Figures 4 and 5 are views in cross-section of parts of another two gear units of a series in accordance with the present invention, being respectively a two stage unit of a first size and a three stage unit of a second, larger size.

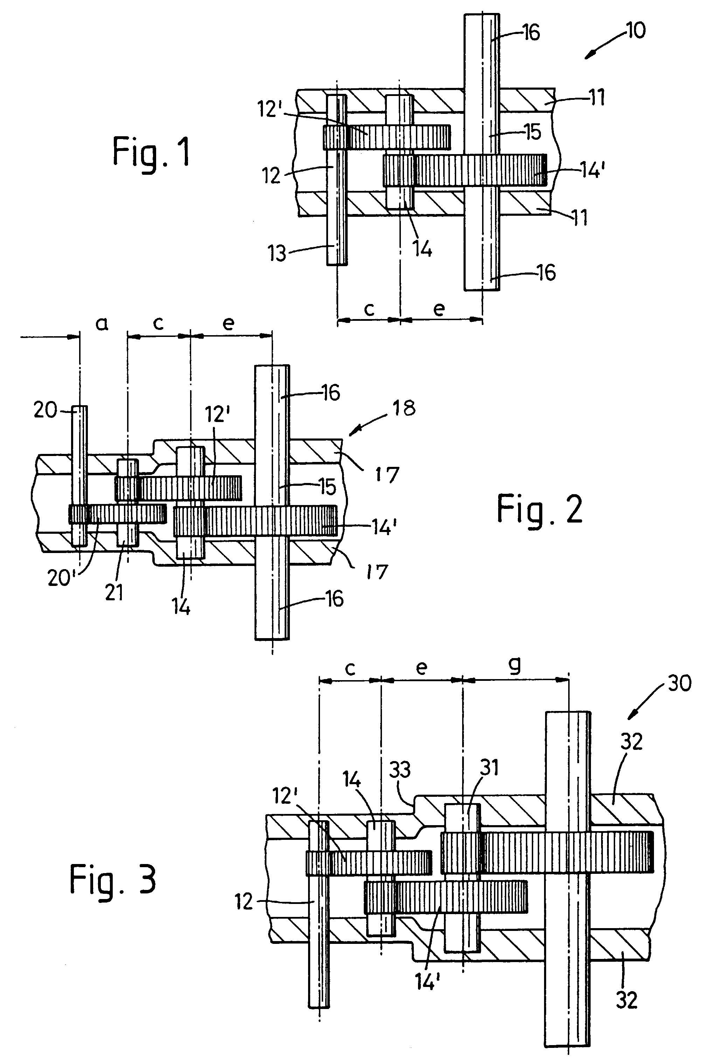

Referring to Figure 1, a two stage gear unit 10 comprises a housing having a pair of non-stepped bearing blocks 11. The blocks 11 are fitted with conventional bearings (not shown) rotatably to support a high speed pinion shaft 12 having a single extension 13, an intermediate pinion shaft 14 which carries a wheel 12' that intermeshes with the pinion shaft 12 and an output shaft 15 having a pair of external extensions 16 and which carries a wheel 14' that intermeshes with the intermediate pinion shaft 14. (The shaft 15 alternatively may have only a single extension).

The centre distances 'c' and 'e' are selected from a standardised series of increasing centre distances a, c, e, g, ...... .

Figure 3 shows a gear unit 30 of a size larger than that of Figure 1 and having three stages. The three stages have centre distances 'c', 'e' and 'g'. The high speed stage and intermediate stage have respectively the same centre distances 'c' and 'e' as the corresponding high speed and low speed stages of the two stage gear unit of a smaller size in Figure 1 and therefore utilise the same shafts 12 and 14 and wheels 12' and 14'.

The housing blocks 32 of Figure 3 are each of a stepped type, symmetrically arranged, and the shafts 12 and 14 are both located in the narrower region of the housing. Thus the high speed pinion shaft 12 is spaced from the step 33 in each housing block by at least the high speed stage centre distance 'c' so that the external extension 13 (or each extension if the shaft were of the double extension type) is readily available for use over its whole length without interference from the step(s) 33.

In a three stage gear unit 18 (see Figure 2) of the same size as the gear unit shown in Figure 1 the same wheel 12', pinion shaft 14, wheel 14' and output shaft 15 are employed for the stages having the corresponding centre distances 'c' and 'e'. The gear unit has a housing 17. The high speed pinion shaft 20 and the intermediate pinion shaft 21 with wheel 20' are additional components and can be utilised for example in a two stage gear unit of a smaller size as is apparent from the previous description of Figure 3 and comparison thereof with Figure 1.

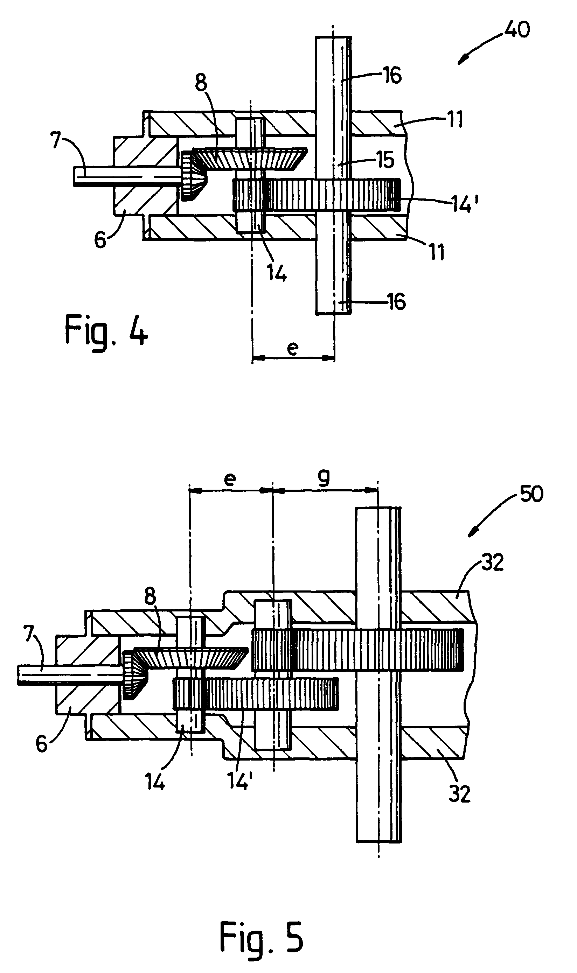

In a second embodiment of the invention as shown in Figures 4 and 5 the aforedescribed standardisation aspects of the cylindrical wheels and pinion shafts of Figures 1 to 3 are shown applied to a two stage gear unit 40 and larger sized three stage gear unit 50 each having a bevel gear high speed assembly.

Thus, as in the first embodiment a high speed bevel gear input pinion shaft or shaft with pinion 7, mounting block 6, bevel wheel 8 first intermediate pinion shaft 14 and wheel 14' are common to both a two stage gear unit of a first size (size E) and a three stage gear unit of a second, larger size (size G).

By virtue of the symmetrical arrangement of the stepped housings of Figures 2, 3 and 5 it will be appreciated that despite standardisation of internals as described above it is possible to obtain an opposite handing of shaft extensions by the simple expedient of selectively reversing the orientation of internals.

The present invention therefore provides high speed and intermediate pinion shafts of adequate stiffness and which are systematically standardised. The invention achieves this in a manner which also allows the provision of bevel gear set assemblies in the same housings and the selective reversal of shaft extensions, in each case the standardised high speed shaft of a three stage gear unit being spaced from the step in the housing so that there is good accessibility for example for coupling devices.

## Claims

1. Series of gear units (10,18,30,40,50) with increasing torque of the kind in which each gear unit comprises two or more stages comprising standardised shaft centre distances (a,c,e...) and standardised gear wheels, characterised in that for any stage of given centre distance (e) and gear ratio the same intermediate pinion shaft (14) is used systematically in a non-stepped two stage housing (11) and stepped three stage housings (17,32) which are stepped symmetrically about a plane which extends transversely relative to said pinion shaft (14).

2. Series of gear units (10,30) according to claim 1 characterised in that for any high speed stage of given centre distance (c) and gear ratio the same high speed pinion shaft (12) is used systematically in a non-stepped two stage housing (11) and a symmetrically stepped three stage housing (32).

3. Series of gear units according to claim 1 or claim 2 characterised in that pairs of gear units of the series have opposite handing of the shaft extension of at least one of the input and output shafts.

4. Series of gear units according to claim 3 wherein said pairs of gear units are of the same size using the same housing and the internals of one gear unit are mounted in a manner which is reversed as compared with that of the other gear unit.

5. Series of gear units according to any one of the preceding claims characterised in that the high speed pinion shaft is of the double extension type.

6. Series of gear units (10,30;40,50) according to any one of the preceding claims characterised in that the same intermediate or low speed stage (14,14') can be combined either with a standardised cylindrical (12,12') or a bevel (7,8) high speed gear stage.

7. Series of gear units according to any one of the preceding claims characterised in that at least some gear units (10,30;40,50) of the series comprise housings (11,32) of a kind adapted to receive and locate a high speed stage which is either of a cylindrical or a bevel gear type.

8. Series of gear units (40,50) according to any one of the preceding claims characterised in that for any high speed bevel gear stage of given size and gear ratio the same bevel gear stage assembly (6,7,8) is used systematically in a non-stepped two stage housing (11) and a symmetrically stepped three stage housing (32).

9. Series of gear units (10,18,30;40,50) according to any one of the preceding claims characterised in that the housing comprises a bearing block (11,17,32) of which at least a part extends continuously between and assists in defining the spacing of successive parallel shafts.

## Patentansprüche

1. Reihe von Getriebeeinheiten (10, 18, 30, 40, 50) mit zunehmendem Drehmoment der Art, bei der jede Getriebeeinheit zwei oder mehr Stufen mit standardisierten Wellen-Mittenabständen (a, c, e ...) und standardisierten Zahnrädern aufweist, **dadurch gekennzeichnet,** daß für jede Stufe eines gegebenen Mittenabstandes (e) und eines gegebenen Übersetzungsverhältnisses die gleiche Zwischen-Ritzelwelle (14) grundsätzlich bei einem nichtstufigen Zweistufengehäuse (11) und stufigen Dreistufengehäusen (17, 32), die um eine sich quer zu der Ritzelwelle (14) erstreckende Ebene symmetrisch stufig ausgebildet sind, verwendet wird.

2. Reihe von Getriebeeinheiten (10, 30) nach Anspruch 1, **dadurch gekennzeichnet,** daß für jede Hochgeschwindigkeits-Stufe mit einem gegebenen Mittenabstand (c) und einem gegebenen Übersetzungsverhältnis die gleiche Hochgeschwindigkeits-Ritzelwelle (12) grundsätzlich bei einem nichtstufigen Zweistufengehäuse (11) und bei einem symmetrisch stufigen Dreistufengehäuse (32) verwendet wird.

3. Reihe von Getriebeeinheiten nach Anspruch 1 oder Anspruch 2, **dadurch gekennzeichnet,** daß Paare der Getriebeeinheiten der Reihe eine gegenüberliegende Erfassung der Wellenverlängerung der Eingangswelle und/oder Ausgangswelle aufweisen.

4. Reihe von Getriebeeinheiten nach Anspruch 3, **dadurch gekennzeichnet,** daß die Paare von Getriebeeinheiten die gleiche Größe unter Verwendung des gleichen Gehäuses aufweisen und die inneren Einbauten jeder Getriebeeinheit in einer Weise eingebaut sind, die im Vergleich zu derjenigen der anderen Getriebeeinheit umgekehrt ist.

5. Reine von Getriebeeinheiten nach irgendeinem der vorhergehenden Ansprüche, **dadurch gekennzeichnet,** daß die Hochgeschwindigkeits-Ritzelwelle eine Welle derjenigen Art mit einer doppelten Verlängerung ist.

6. Reihe von Getriebeeinheiten (10, 30, 40, 50) nach irgendeinem der vorhergehenden Ansprüche, **dadurch gekennzeichnet,** daß die gleiche Zwischen- oder Niedergeschwindigkeits-Stufe (14, 14') entweder mit einer standardisierten genormten, Zylinderrad-Hochgeschwindigkeits-Getriebestufe (12, 12') oder mit einer genormten Xegelrad-Rochgeschwindigkeits-Getriebestsufe (7, 8) kombinierbar ist.

7. Reihe von Getriebeeinheiten nach irgendeinem der vorhergehenden Ansprüche, **dadurch gekennzeichnet,** daß mindestens einige Getriebeeinheiten (10, 30; 40, 50) der Reihe Gehäuse (11, 32) einer Art aufweisen, die zur Aufnahme und Anordnung einer Hochgeschwindigkeits-Stufe geeignet und bestimmt ist, die entweder eine solche einer Zylinderrad-Art oder eine solche einer kegelrad-Art ist.

8. Reihe von Getriebeeinheiten (40, 50) nach irgendeinem der vorhergehenden Ansprüche, **dadurch gekennzeichnet,** daß für jede Kegelrad-Hochgeschwindigkeits-Stufe einer gegebenen Größe und eines gegebenen Übersetzungsverhältnisses die gleiche Kegelrad-Stufenbaugruppe (6, 7, 8) grundsätzlich bei einem nicht-stufigen Zweistufengehäuse (11) und einem symmetrisch stufigen Dreistufen-Gehäuse (32) verwendet wird.

9. Reihe von Getriebeeinheiten (10, 18, 30; 40, 50) nach irgendeinem der vorhergehenden Ansprüche, **dadurch gekennzeichnet,** daß das Gehäuse einen Lagerblock (11, 17, 32) aufweist, von dem mindestens ein Teil sich kontinuierlich zwischen den aufeinanderfolgenden parallelen Wellen erstreckt und die Bildung des Abstandes aufeinanderfolgender paralleler Wellen unterstützt.

## Revendications

1. Série de trains d'engrenages (10, 18, 30, 40, 50) à couple croissant du type dans lequel chaque train d'engrenages comprend au moins deux étages comprenant des entre-axes d'arbres (a, c, e, ...) standardisés et des roues dentées standardisées, caractérisée en ce que pour chaque étage ayant un entre-axes (e) et un rapport d'engrenage donnés, le même arbre à pignon intermédiaire (14) est utilisé systématiquement dans un carter à deux étages sans gradin (11) et dans des carters à trois étages avec gradins (17, 32) dont les gradins sont symétriques par rapport à un plan qui s'étend transversalement audit arbre à pignon (14).

2. Série de trains d'engrenages (10, 30) selon la revendication 1, caractérisée en ce que pour chaque étage de vitesse élevée ayant un entre-axes (c) et un rapport d'engrenage donnés, le même arbre à pignon de vitesse élevée (12) est utilisé systématiquement dans un carter à deux étages sans gradin (11) et dans un carter à trois étages avec gradins symétriques (32).

3. Série de trains d'engrenages selon la revendication 1 ou la revendication 2, caractérisée en ce que des paires de trains d'engrenages de la série ont une disposition opposée du prolongement de l'un au moins des arbres d'entrée et de sortie.

4. Série de trains d'engrenages selon la revendication 3, dans laquelle lesdites paires de trains d'engrenages sont de la même taille et utilisent le même carter, et en ce que les éléments internes de l'un des trains d'engrenages sont montés de manière inversée par rapport à ceux de l'autre train d'engrenages.

5. Série de trains d'engrenages selon l'une quelconque des revendications précédentes, caractérisée en ce que l'arbre à pignon de vitesse élevée est du type à deux prolongements.

6. Série de trains d'engrenages (10, 30; 40, 50) selon l'une quelconque des revendications précédentes, caractérisée en ce que le même étage intermédiaire ou de vitesse faible (14, 14') peut être combiné soit avec un étage de vitesse élevée à engrenages cylindriques standardisés (12, 12') soit avec un étage de vitesse élevée à engrenages coniques standardisés (7, 8).

7. Série de trains d'engrenages selon l'une quelconque des revendications précédentes, caractérisée en ce que certains au moins des trains d'engrenages (10, 30; 40, 50) de la série comprennent des carters (11, 32) d'un type adapté pour recevoir et positionner un étage de vitesse élevée soit du type à engrenages cylindriques soit du type à engrenages coniques.

8. Série de trains d'engrenages (40, 50) selon l'une quelconque des revendications précédentes, caractérisée en ce que pour chaque étage d'engrenages coniques de vitesse élevée ayant une taille et un rapport d'engrenage donnés, le même ensemble formant étage d'engrenages coniques (6, 7, 8) est utilisé systématiquement dans un carter à deux étages sans gradin (Il) et dans un carter à trois étages avec gradins symétriques (32).

9. Série de trains d'engrenages (10, 18, 30; 40, 50) selon l'une quelconque des revendications précédentes, caractérisée en ce que le carter comprend un bloc de palier (11, 17, 32) dont une partie au moins s'étend d'une manière continue entre des arbres parallèles successifs et contribue à définir l'espacement de ceux-ci.
